# EUROPÄISCHE PATENTSCHRIFT

(11) **EP 1 504 642 B1**
(45) Veröffentlichungstag und Bekanntmachung des Hinweises auf die Patenterteilung: **15.04.2009**
(21) Anmeldenummer: 04103712.8
(22) Anmeldetag: 02.08.2004
(51) Int. Cl.: A01C 7/08, A01C 7/04, A01C 15/04

(54) **Sämaschine**
Seeder
Semoir

(30) Priorität: 05.08.2003 US 634265
(43) Veröffentlichungstag der Anmeldung: 09.02.2005
(73) Patentinhaber: DEERE & COMPANY, Moline, Illinois 61265-8098 (US)
(72) Erfinder: McCartney, Scott Charles, Davenport, IA 52807 (US)
(74) Vertreter: Holst, Sönke

(56) Entgegenhaltungen:
- DE-A- 2 025 039
- DE-A- 3 227 487
- US-A- 1 336 323
- US-A- 4 843 983
- US-A- 5 515 795

## Beschreibung

Die Erfindung betrifft eine Sämaschine mit einem einen Mittelrahmen und Seitenrahmen aufweisenden Rahmen, wobei der Rahmen in eine Betriebsstellung, in der die Seitenrahmen sich in Querrichtung vom Mittelrahmen erstrecken, und in eine Transportstellung, in der die Seitenrahmen sich senkrecht zum Mittelrahmen erstrecken, bringbar ist. Der Mittelrahmen und die Seitenrahmen weisen jeweils einen hohl ausgebildeten Geräteträger auf, der einen pneumatischen Verteiler bildet.

Landwirtschaftliche Sämaschinen werden mit Druckluft betrieben, um Saatgut und landwirtschaftliche Chemikalien zu befördern und zu dosieren. Pneumatisch betriebene Dosiervorrichtungen für Saatgut an Reihenanbausäeinheiten werden in zwei Systemarten unterteilt. Bei der einen Systemart wird positive Druckluft erzeugt, d. h. Druckluft, deren Druck über dem Umgebungsluftdruck liegt, um das Saatgut zu dosieren. Bei der anderen Systemart wird negative Druckluft erzeugt, d. h. Druckluft, deren Druck unter Umgebungsluftdruck liegt, um das Saatgut zu dosieren. Zur Erzeugung der positiven oder negativen Druckluft wird eine Luftpumpe eingesetzt. Die Luftpumpe kann pneumatisch mit einem Druckluftverteiler verbunden sein. Der Druckluftverteiler wiederum ist über einen Luftschlauch pneumatisch mit der jeweiligen Dosiervorrichtung verbunden. Es ist bekannt einen querverlaufenden Stützträger oder Geräteträger entsprechend abzudichten, um einen Druckluftverteiler auszubilden.

In der US 4,843,983 A wird eine pneumatische Schnellkupplung für eine faltbare landwirtschaftliche Pflanzmaschine offenbart. Die Schnellkupplung umfasst einen starren Kunststofftrichter, der an ein Ende einer ersten Leitung montiert ist, und einen flexiblen und elastischen Gummiflanschteil, der an eine zweite Leitung montiert ist. Die innere Oberfläche des Trichters bildet eine Dichtungsfläche, die mit dem Flansch in Eingriff tritt, wenn dieser in den Trichter eingefügt wird. Die Kupplung kann automatisch gekoppelt und entkoppelt werden, indem der Flanschteil durch Verschwenken in den Trichter eingefügt oder herausgezogen wird. Problematisch dabei ist, dass die Verwendung einer Leitung für eine pneumatische Schnellkupplung mit einem erheblichen Aufwand an Bauteilen verbunden ist.

Die der Erfindung zugrunde liegende Aufgabe wird darin gesehen, eine Sämaschine der eingangs genannten Art anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Sämaschine der eingangs genannten Art derart ausgebildet, dass der Geräteträger des Mittelrahmens mittels elastischer Glocken pneumatisch mit den Geräteträgern der Seitenrahmen verbunden ist, wobei die Glocken eine geschlossene pneumatische Verbindung zwischen dem Geräteträger des Mittelrahmens und den Geräteträgern der Seitenrahmen herstellen, wenn der Rahmen in seiner Betriebsstellung ist.

Die Sämaschine ist mit einem Rahmen ausgebildet, der einen Mittelrahmen und einen linken und rechten Seitenrahmen aufweist. Der Rahmen kann in eine Betriebsstellung und in eine Transportstellung gebracht werden. Der Mittelrahmen und der linke und rechte Seitenrahmen umfassen jeder einen als Fachwerk ausgebildeten Geräteträger, der einen quer verlaufenden Hauptträger und einen parallel dazu verlaufenden und vertikal beabstandeten Nebenträger aufweist. Der Nebenträger ist hohl ausgebildet und abgedichtet und stellt einen pneumatischen Verteiler dar. Einzelne Pflanzeinheiten sind an die Geräteträger montiert. Der pneumatische Verteiler des Mittelrahmens ist mittels einer elastischen Kupplungsglocke pneumatisch mit dem rechten und dem linken Seitenrahmen koppelbar. Die Kupplungsglocke bildet eine pneumatische Verbindung zwischen dem Mittelrahmen und den Seitenrahmen, wenn der Rahmen in Betriebsstellung gebracht wird. Die pneumatischen Verteiler sind durch Luftschläuche pneumatisch mit den pneumatisch betriebenen Saatgut-Dosiervorrichtungen der Pflanzeinheiten verbunden.

Ein besonderer Vorteil der Erfindung liegt darin, dass eine erfindungsgemäße Sämaschine eine einfache automatische Vorrichtung zum Koppeln eines pneumatischen Geräteträger-Verteilers bietet, wenn der Geräteträger in seine Betriebsstellung gebracht wird. Die Vorrichtung umfasst simple elastische Gummiglocken (Kupplungsglocken), welche eine pneumatische Verbindung zwischen den pneumatischen Verteilern herstellt.

Anhand der Zeichnungen, die ein Ausführungsbeispiel der Erfindung zeigen, werden nachfolgend die Erfindung sowie Vorteile und vorteilhafte Weiterbildungen und Ausgestaltungen der Erfindung näher beschrieben und erläutert.

Es zeigt:

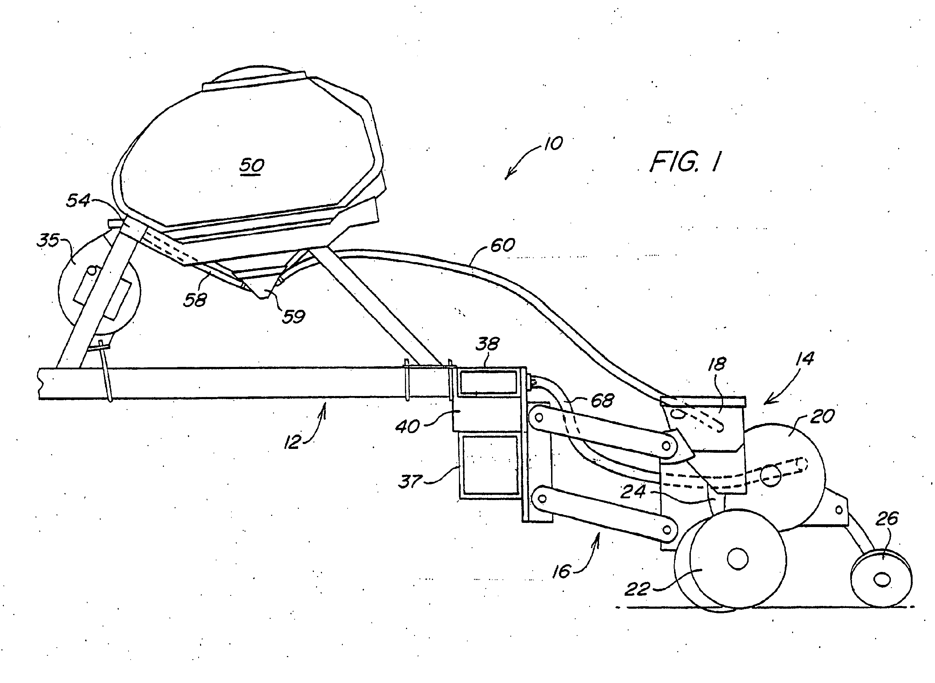

- Fig. 1: eine schematische Seitenansicht einer pneumatisch betriebenen Sämaschine,

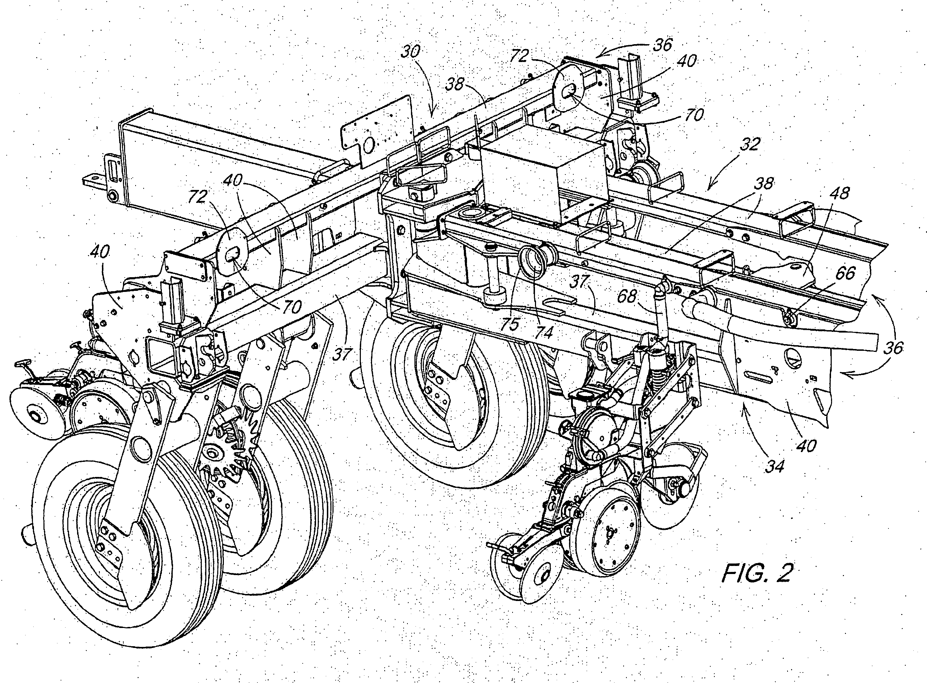

- Fig. 2: eine perspektivische Teilansicht einer Sämaschine in Transportstellung und

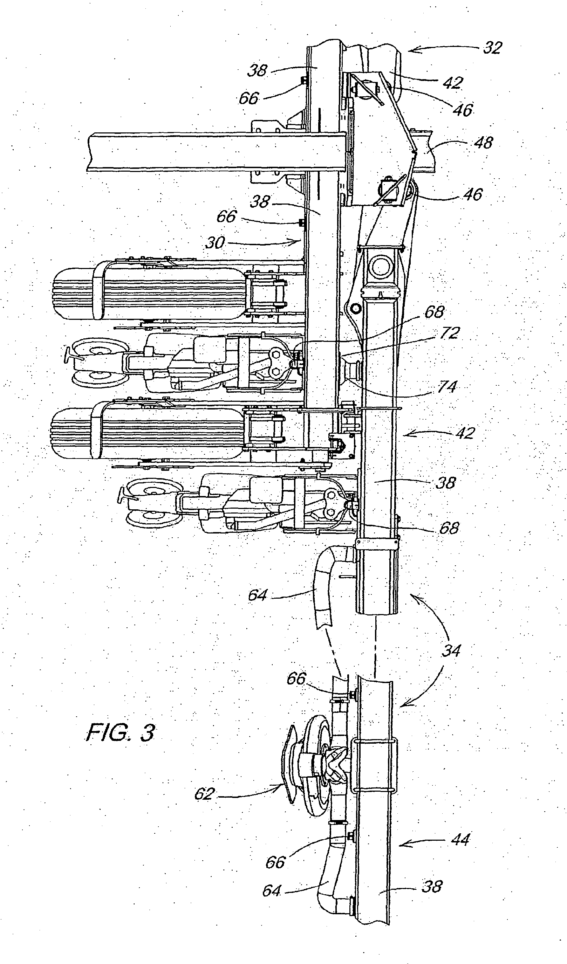

- Fig. 3: eine Teilansicht in Draufsicht von der Sämaschine aus Figur 2 in Betriebsstellung.

Eine landwirtschaftliche Sämaschine 10 umfasst einen Rahmen 12, an dem eine Vielzahl einzelner Pflanzeinheiten 14 montiert sind. Die Pflanzeinheiten 14 sind mit dem Rahmen 12 über ein Parallelogrammgestänge 16 derart verbunden, dass die einzelnen Pflanzeinheiten 14 in einem begrenzten Maß relativ zum Rahmen 12 angehoben bzw. abgesenkt werden können. Jede einzelne Pflanzeinheit 14 umfasst einen Saatgutbehälter 18 zur Aufnahme von Saatgut, eine Dosiervorrichtung 20 zur Dosierung von Saatgut aus dem Saatgutbehälter 18 und einen Furchenöffner 22 zur Ausbildung einer Pflanzfurche in einen Ackerboden in welche das Saatgut von der Dosiervorrichtung 20 eingebracht wird. Das Saatgut wird durch ein Saatgutrohr 24 von der Dosiervorrichtung 20 in die Pflanzfurche gebracht. Eine Schließvorrichtung 26 wird eingesetzt, um die Pflanzfurche mit dem darin enthaltenen Saatgut zu verschließen. In dem dargestellten Ausführungsbeispiel ist die Dosiervorrichtung 20 als Vakuum-Dosiervorrichtung ausgebildet, wobei auch eine mit positiver Druckluft betriebene Dosiervorrichtung in einer erfindungsgemäßen Sämaschine einsetzbar ist.

Der Rahmen 12 umfasst einen Mittelrahmen 30 und einen linken und rechten Seitenrahmen 32, 34. Jeder Rahmen weist, bezogen auf eine Betriebsstellung des Rahmens 12, einen sich in Querrichtung erstreckenden Geräteträger 36 auf, wobei der Geräteträger 36 einen Hauptträger 37 und einen parallel dazu verlaufenden Nebenträger 38 aufweist die beide zueinander vertikal beabstandet und mittels Stege 40 miteinander verbunden sind, um ein Fachwerk zu bilden. Beide Seitenrahmen 32, 34 weisen einen Innenteil 42 und einen Außenteil 44 auf. Der Innenteil 42 und der Außenteil 44 sind schwenkbar über sich in Längsrichtung erstreckende Schwenkbolzen miteinander verbunden, so dass der Rahmen 12 sich den Bodenkonturen besser anpassen kann. Der Innenteil 42 ist gegenüber dem Mittelrahmen 30 nicht um eine sich in Längsrichtung erstreckende Achse verschwenkbar. In einer Transportstellung sind die Seitenrahmen 32, 34 des Rahmens 12 über vertikal ausgerichtete Schwenkbolzen 46 vorwärts geschwenkt, so dass sie parallel zu einer sich in Längsrichtung erstreckenden und teleskopisch verstellbaren Zugdeichsel 48 angeordnet sind.

In einem am Mittelrahmen 30 montierten Saatguthauptbehälter 50 ist Saatgut enthalten. Um das Saatgut von dem Saatguthauptbehälter 50 zu den Saatgutbehältern 18 pneumatisch zu befördern wird ein Gebläse 35 eingesetzt. Das Gebläse 35 wird durch einen Hydraulikmotor angetrieben, wobei auch andere Arten von Motoren, beispielsweise Elektromotoren, zum Antrieb des Gebläses 35 einsetzbar sind. Das Gebläse fördert Druckluft in einen Verteiler 54 durch einen Hauptluftschlauch. Der Verteiler 54 ist aus einem hohlen, geschlossenen Rohrträger des Rahmens 12 ausgebildet. Der Verteiler 54 ist, entsprechend der Anzahl der am Rahmen 12 montierten Pflanzeinheiten 14, mit einer Vielzahl von Verteilerausgängen versehen. Einzelne Luftversorgungsleitungen 58 erstrecken sich von den Verteilerausgängen und leiten Druckluft vom Verteiler 54 zu einer stromaufwärts gelegenen Seite einer Düsenanordnung 59.

Die Düsenanordnung 59 ist am Boden des Saatguthauptbehälters 50 angeordnet. Das im Hauptbehälter 50 befindliche Gut gelangt durch Schwerkraft in die Düsenanordnung 59. Die stromaufwärts gelegene Seite der Düsenanordnung 59 ist, entsprechend der Anzahl der Luftversorgungsleitungen 58, mit einer Anzahl von Lufteingängen versehen. Die Lufteingänge sind entlang der stromaufwärts gelegenen Seite der Düsenanordnung 59 in Querrichtung beabstandet angeordnet. Die stromabwärts gelegene Seite der Düsenanordnung 59 ist, entsprechend der Anzahl der Luftversorgungsleitungen 58, mit einer Anzahl von Gutauslassöffnungen versehen. Die Gutauslassöffnungen sind ebenfalls in Querrichtung beabstandet angeordnet, entlang der stromabwärts gelegenen Seite der Düsenanordnung 59. Die Gutauslassöffnungen sind gegenüber den Lufteingängen angeordnet. Jeder Lufteingang ist zu einer entsprechenden Gutauslassöffnung ausgerichtet. Um das von einem Luftstrom aufgenommene Gut zu den Saatgutbehältern 18 zu leiten, sind Gutversorgungsschläuche 60 vorgesehen, die sich von den Gutauslassöffnungen zu den einzelnen Saatgutbehältern 18 erstrecken.

Das in den Saatgutbehältern 18 vorhandene Saatgut wird mittels einer Vakuum-Dosiervorrichtung 20 dosiert. Das Vakuum wird durch rechts und links angeordnete Vakuumpumpen 62 erzeugt, die an den Seitenrahmen 32, 34 montiert sind, wobei nur die rechte Vakuumpumpe 62 gezeigt ist. Die Vakuumpumpen 62 werden durch Hydraulikmotoren angetrieben, wobei auch andere Motoren, beispielsweise Elektromotoren, eingesetzt werden können. Das von den Vakuumpumpen 62 erzeugte Vakuum wird durch Schläuche 64 an die abgedichteten Nebenträger 38 der Innen- und Außenteile 42, 44 der Seitenrahmen 32, 34 übertragen. Die hohl ausgebildeten Nebenträger 38 bilden einen Vakuumverteiler zum Verteilen des Vakuums entlang des jeweiligen Geräteträgers 36. Jeder Nebenträger 38 ist mit mehreren in Querrichtung beabstandeten Anschlussnippeln 66 versehen, wobei für jede Pflanzeinheit 14 ein Anschlussnippel 66 vorgesehen ist. Ausgehend von den Anschlussnippeln 66 erstrecken sich Luftschläuche 68 zu den einzelnen Dosiervorrichtungen 20.

Der Nebenträger 38 des Mittelrahmens 30 ist mit linken und rechten Öffnungen 70 versehen, die von einer eben ausgebildeten Platte 72 umgeben sind. Die Nebenträger 38 der Innenteile 42 der Seitenrahmen 32, 34 sind mit einer Gummiglocke 74 versehen, welche einen kreisförmigen Rand 75 aufweist. Die Gummiglocken 74 liegen gegenüber den Öffnungen 70, wenn der Rahmen 12 in eine Betriebsstellung gebracht ist. Die Glocken 74 sind derart bemessen, dass sie mit den ebenen Platten 72 in Eingriff treten, wenn der Rahmen 12 in Betriebsstellung gebracht wird. Die Ränder 75 umgeben die Öffnungen 70 und bilden eine Abdichtung mit den ebenen Platten 72. Hierbei ist es wichtig, den Abstand zwischen dem Nebenträger 38 des Mittelrahmens 30 und den Nebenträgern 38 der Seitenrahmen 32, 34 derart zu überwachen, dass zum einen die Glocken 74 mit den Platten 72 in Eingriff treten, zum anderen die Glocken 74 von den Nebenträgern 38 nicht übermäßig zusammengedrückt werden, was dauerhaft zu einer Deformierung der Glocken führen würde.

## Patentansprüche

1. Sämaschine mit einem einen Mittelrahmen (30) und Seitenrahmen (32, 34) aufweisenden Rahmen (12), wobei der Rahmen (12) in eine Betriebsstellung, in der die Seitenrahmen (32, 34) sich in Querrichtung vom Mittelrahmen (30) erstrecken, und in eine Transportstellung, in der die Seitenrahmen (32, 34) sich senkrecht zum Mittelrahmen (30) erstrecken, bringbar ist, und der Mittelrahmen (30) und die Seitenrahmen (32, 34) jeweils einen hohl ausgebildeten Geräteträger (36) aufweisen, der einen pneumatischen Verteiler bildet, **dadurch gekennzeichnet, dass** der Geräteträger (36) des Mittelrahmens (30) mittels elastischer Glocken (74) pneumatisch mit den Geräteträgern (36) der Seitenrahmen (32, 34) verbunden ist, wobei die Glocken (74) eine geschlossene pneumatische Verbindung zwischen dem Geräteträger (36) des Mittelrahmens (30) und den Geräteträgern (36) der Seitenrahmen (32, 34) herstellen, wenn der Rahmen (12) in seiner Betriebsstellung ist.

2. Sämaschine nach Anspruch 1, **dadurch gekennzeichnet, dass** einzelne an den Geräteträgern (36) montierte Pflanzeinheiten (14) vorgesehen sind, von denen jede eine Dosiervorrichtung (20) umfasst und die Geräteträger (36) mittels Schläuchen (68) pneumatisch mit den Dosiervorrichtungen (20) verbunden sind.

3. Sämaschine nach Anspruch 1 oder 2, **dadurch gekennzeichnet, dass** eine sich in Vorwärtsrichtung vom Mittelrahmen (30) erstreckende Zugdeichsel (48) vorgesehen ist.

4. Sämaschine nach Anspruch 3, **dadurch gekennzeichnet, dass** die Seitenrahmen (32, 34) von der Betriebsstellung in die Transportstellung in Vorwärtsrichtung entlang der Zugdeichsel (48) schwenkbar sind.

5. Sämaschine nach einem der vorhergehenden Ansprüche, **dadurch gekennzeichnet, dass** jeder Geräteträger (36) einen Hauptträger (37) und einen dazu vertikal beabstandeten und parallel angeordneten Nebenträger (38) aufweist, die zusammen ein Fachwerk bilden.

6. Sämaschine nach Anspruch 5, **dadurch gekennzeichnet, dass** die pneumatischen Verteiler in den Nebenträgern (38) ausgebildet sind.

7. Sämaschine nach Anspruch 5 oder 6, **dadurch gekennzeichnet, dass** die Nebenträger (38) eine der Anzahl der einzelnen Pflanzeinheiten (14) entsprechende Anzahl von Anschlussnippeln (66) aufweisen und die Schläuche (68) mit den Anschlussnippeln (66) verbunden sind.

8. Sämaschine nach einem der vorhergehenden Ansprüche, **dadurch gekennzeichnet, dass** die elastischen Glocken (74) einen kreisförmigen Rand (75) aufweisen.

9. Sämaschine nach einem der vorhergehenden Ansprüche, **dadurch gekennzeichnet, dass** der Geräteträger (36) des Mittelrahmens (30) mit Öffnungen (70) und die Geräteträger (36) der Seitenrahmen (32, 34) mit den elastischen Glocken (74) versehen sind.

10. Sämaschine nach Anspruch 9, **dadurch gekennzeichnet, dass** die Öffnungen (70) des Geräteträgers (36) des Mittelrahmens (30) mit eben ausgebildeten Platten (72) versehen sind, welche mit den kreisförmigen Rändern (75) der elastischen Glocken (74) in Eingriff treten, wenn der Rahmen (12) in Betriebsstellung gebracht ist.

11. Sämaschine nach einem der vorhergehenden Ansprüche, **dadurch gekennzeichnet, dass** Vakuumpumpen (62) vorgesehen sind, welche an den Seitenrahmen (32, 34) montiert sind und mit den Geräteträgern (36) der Seitenrahmen (32, 34) pneumatisch verbunden sind.

## Claims

1. Seeder with a frame (12) having a central frame (30) and side frames (32, 34), wherein the frame (12) can be brought into an operating position, in which the side frames (32, 34) extend in the transverse direction from the central frame (30), and into a transporting position, in which the side frames (32, 34) extend perpendicularly to the central frame (30), and the central frame (30) and the side frames (32, 34) each have a tool carrier (36) which is of hollow design and forms a pneumatic distributor, **characterized in that** the tool carrier (36) of the central frame (30) is pneumatically connected to the tool carriers (36) of the side frames (32, 34) by means of elastic bell-shaped elements (74), the bell-shaped elements (74) producing a closed pneumatic connection between the tool carrier (36) of the central frame (30) and the tool carriers (36) of the side frames (32, 34) if the frame (12) is in its operating position.

2. Seeder according to Claim 1, **characterized in that** individual planting units (14) which are fitted on the tool carriers (36) and of which each comprises a metering device (20) are provided, and the tool carriers (36) are pneumatically connected to the metering devices (20) by means of tubes (68).

3. Seeder according to Claim 1 or 2, **characterized in that** a drawbar (48) which extends in the forwards direction of the central frame (30) is provided.

4. Seeder according to Claim 3, **characterized in that** the side frames (32, 34) can be pivoted in the forwards direction along the drawbar (48) from the operating position into the transporting position.

5. Seeder according to one of the preceding claims, **characterized in that** each tool carrier (36) has a main carrier (37) and a secondary carrier (38) which is spaced apart vertically therefrom and arranged parallel thereto, said carriers together forming a framework.

6. Seeder according to Claim 5, **characterized in that** the pneumatic distributors are formed in the secondary carriers (38).

7. Seeder according to Claim 5 or 6, **characterized in that** the secondary carriers (38) have a number of connecting nipples (66) corresponding to the number of individual planting units (14), and the tubes (68) are connected to the connecting nipples (66).

8. Seeder according to one of the preceding claims, **characterized in that** the elastic bell-shaped elements (74) have a circular edge (75).

9. Seeder according to one of the preceding claims, **characterized in that** the tool carrier (36) of the central frame (30) is provided with openings (70), and the tool carriers (36) of the side frames (32, 34) are provided with the elastic bell-shaped elements (74).

10. Seeder according to Claim 9, **characterized in that** the openings (70) in the tool carrier (36) of the central frame (30) are provided with plates (72) which are of planar design and enter into engagement with the circular edges (75) of the elastic bell-shaped elements (74) when the frame (12) is brought into the operating position.

11. Seeder according to one of the preceding claims, **characterized in that** vacuum pumps (62) are provided, said vacuum pumps being fitted on the side frames (32, 34) and being pneumatically connected to the tool carriers (36) of the side frames (32, 34).

## Revendications

1. Semoir comprenant un cadre (12) présentant un cadre central (30) et des cadres latéraux (32, 34), le cadre (12) pouvant être amené dans une position fonctionnelle, dans laquelle les cadres latéraux (32, 34) s'étendent dans la direction transversale depuis le cadre central (30), et dans une position de transport, dans laquelle les cadres latéraux (32, 34) s'étendent perpendiculairement au cadre central (30), et le cadre central (30) et les cadres latéraux (32, 34) présentant à chaque fois un support d'appareil de configuration creuse (36), qui forme un distributeur pneumatique, **caractérisé en ce que** le support d'appareil (36) du cadre central (30) est connecté au moyen de cloches élastiques (74) de manière pneumatique aux supports d'appareil (36) des cadres latéraux (32, 34), les cloches (74) créant une connexion pneumatique fermée entre le support d'appareil (36) du cadre central (30) et les supports d'appareil (36) des cadres latéraux (32, 34), lorsque le cadre (12) est dans sa position fonctionnelle.

2. Semoir selon la revendication 1, **caractérisé en ce qu'**il est prévu des unités de plantage (14) individuelles montées sur les supports d'appareil (36), dont chacune comprend un dispositif de dosage (20) et les supports d'appareil (36) sont connectés pneumatiquement aux dispositifs de dosage (20) au moyen de flexibles (68).

3. Semoir selon la revendication 1 ou 2, **caractérisé en ce qu'**il est prévu un timon de traction (48) s'étendant dans la direction d'avance du cadre central (30).

4. Semoir selon la revendication 3, **caractérisé en ce que** les cadres latéraux (32, 34) peuvent pivoter de la position fonctionnelle dans la position de transport dans la direction d'avance le long du timon de traction (48).

5. Semoir selon l'une quelconque des revendications précédentes, **caractérisé en ce que** chaque support d'appareil (36) présente un support principal (37) et un support auxiliaire (38) espacé verticalement de celui-ci et disposé parallèlement, les deux supports formant ensemble une ossature.

6. Semoir selon la revendication 5, **caractérisé en ce que** les distributeurs pneumatiques sont réalisés dans les supports auxiliaires (38).

7. Semoir selon la revendication 5 ou 6, **caractérisé en ce que** les supports auxiliaires (38) présentent un nombre de raccords filetés (66) correspondant au niveau des unités de plantage individuelles (14), et les flexibles (68) sont connectés aux raccords filetés (66).

8. Semoir selon l'une quelconque des revendications précédentes, **caractérisé en ce que** les cloches élastiques (74) présentent un bord circulaire (75).

9. Semoir selon l'une quelconque des revendications précédentes, **caractérisé en ce que** le support d'appareil (36) du cadre central (30) est pourvu d'ouvertures (70) et les supports d'appareil (36) des cadres latéraux (32, 34) sont pourvus des cloches élastiques (74).

10. Semoir selon la revendication 9, **caractérisé en ce que** les ouvertures (70) du support d'appareil (36) du cadre central (30) sont pourvues de plaques de configuration plane (72), qui viennent en prise avec les bords circulaires (75) des cloches élastiques (74) lorsque le cadre (12) est amené dans la position fonctionnelle.

11. Semoir selon l'une quelconque des revendications précédentes, **caractérisé en ce que** des pompes à vide (62) sont prévues, lesquelles sont montées sur les cadres latéraux (32, 34) et sont connectées pneumatiquement aux supports d'appareil (36) des cadres latéraux (32, 34).
